# FASCICULE DE BREVET EUROPEEN

(11) **EP 0 855 033 B1**
(45) Date de publication et mention de la délivrance du brevet: **09.01.2002**
(21) Numéro de dépôt: 96934908.3
(22) Date de dépôt: 14.10.1996
(51) Int. Cl.: G01N 35/10, B01L 3/02

(54) **DISPOSITIF POUR LE TRANSFERT D'ECHANTILLONS DE MICRO-QUANTITES DE LIQUIDES**
VORRICHTUNG ZUM ÜBERTRAGEN VON MIKRO-MENGEN VON FLÜSSIGEN PROBEN
DEVICE FOR TRANSFERRING SAMPLES OF MICRO-AMOUNTS OF LIQUIDS

(30) Priorité: 12.10.1995 FR 9511996
(43) Date de publication de la demande: 29.07.1998
(73) Titulaire: Genomic (S.A.), 74160 Collonges-sous-Salève (FR)
(72) Inventeur: GAZEAU, Michel, F-74160 Saint-Julien-en-Genevois (FR)
(74) Mandataire: Breese, Pierre
(86) Numéro de dépôt international: FR9601602
(87) Numéro de publication internationale: WO9714040

(56) Documents cités:
- EP-A- 0 280 473
- EP-A- 0 289 946
- BE-A- 904 872
- NL-A- 6 504 453
- US-A- 3 444 742
- US-A- 5 061 449
- US-A- 5 312 592
- US-A- 5 425 402

## Description

La présente invention concerne un dispositif pour le transfert d'échantillons de micro-quantités de liquides, du type comportant un ensemble de buses d'aspiration/refoulement raccordées par l'intermédiaire de tubes souples à une ou plusieurs seringues munies d'un piston motorisé.

Par micro-quantités, on entendra, dans le sens du présent brevet, des quantités comprises entre une fraction de microlitres et quelques millilitres.

Le principe général de tels dispositifs est connu dans l'état de la technique, et on se reportera par exemple au brevet français FR2668390 décrivant une pipette multicanal. Selon ce document de l'art antérieur, la pipette multicanal comprend un corps à la face inférieure duquel sont fixés des cylindres dont l'espace intérieur communique avec celui du corps et dont la partie inférieure présente une surface extérieure conique. La pipette multicanal comprend également des embouts amovibles emmanchés de manière étanche sur la partie inférieure des cylindres. A la surface extérieure des cylindres est disposée une barrette, pour la dépose des embouts amovibles, qui peut se déplacer dans le sens de la longueur des cylindres. La surface inférieure de la barrette est réalisée de manière à former des gradins présentant une hauteur variable et dont chacun est disposé en face d'un embout amovible.

Le brevet US58058784 divulgue un autre document de l'art antérieur, constitué par une pipette automatique comprenant un module d'entraînement comportant essentiellement un arbre auquel un moteur pas-à-pas communique un mouvement de translation longitudinale, et une structure de déplacement de liquide qui est accouplée au module d'entraînement et qui contient un piston entraîné par l'arbre pour déplacer du liquide à prélever ou à expulser. L'alimentation et le circuit de commande du moteur sont contenus dans un boîtier placé au-dessus du module d'entraînement, qui comporte également un clavier de commande et un afficheur.

Ces dispositifs de l'art antérieur sont réalisés soit sous forme d'instrument dit de poing, soit sous forme de robot.

On connaît également dans l'état de la technique des dispositifs formés par un bâti supportant une structure articulée sur laquelle sont montées plusieurs seringues indépendantes. De tels dispositifs sont décrit dans le brevet américain US3444742, le brevet néerlandais NL6504453, le brevet américain US5061449 ou le brevet européen EP0289946. Il s'agit d'un bâti comportant une structure articulée recevant une pluralité de seringues toutes mobiles. Chacune des seringues est motorisée. Il s'agit d'une structure lourde et encombrante mal adaptée à l'usage de la microbiologie.

Un autre document, le brevet européen EP0280473, concerne un dispositif de transfert d'échantillons dont seule les moyens mécaniques articulés sont décrits.

Ces moyens ne permettent que le passage d'un premier écartement à un second écartement. Ils ne permettent pas de réaliser un écartement variable comme le permet le dispositif de la demanderesse. Ce document ne suggère en aucune façon à l'Homme du Métier de réaliser un dispositif permettant de réaliser un écartement quelconque des buses, puisque son principe même est opposé à une continuité de l'écartement.

Un autre brevet, le brevet belge BE904.872 divulgue un dispositif permettant un écartement quelconque de chacun des embouts, et ne garantit pas un pas constant. Il est nécessaire d'assurer manuellement le positionnement de chacun des embouts, ce qui se traduit par une perte de temps innacceptable. En outre, ceci ne permet pas un ajustement dynamique de l'écartement, entre la prise d'échantillons et le refoulement des échantillons dans des réceptacles régulièrement espacés.

L'invention se différencie fondamentalement de tous ces dispositifs de l'art antérieur par le fait que l'écartement entre les embouts peut varier continuement, tout en maintenant un pas constant. Une caractéristique essentielle de l'invention est de permettre une variation de l'écartement depuis une position très rapprochée, compatible avec des micro-supports d'échantillons, jusqu'à une position écartée de plusieurs centimètres. De plus, l'invention vise à proposer une solution légère de façon à éviter l'emploi de bras manipulateurs encombrant et couteux, de type automates de laboratoire.

Pour atteindre ces buts, l'invention à nécessité une démarche inventive élaborée, consistant à une la succession d'étapes suivantes :
- remplaçemnt de la pluralité de seringues mobiles par une ou plusieurs seringues fixes ;
- assurer la mobilité des embouts des seringues seulement ;
- conception d'un moyen pour raccorder les embouts mobiles à la seringue fixe.

Cette succession d'étape ne relève pas de la démarche évidente de l'Homme du Métier, mais d'une activité inventive.

Dans la première réalisation, le dispositif se présente sous la forme d'un corps tubulaire apte à être manipulé manuellement, et présentant à son extrémité un ensemble de buses à écartement constant.

Les dispositifs dits de poing permettent de réaliser différentes fonctions, telles le pipetage, la dilution, la distribution de fractions aliquotes, la titration, la mesure de volume non connus, le mixage, ou encore des séquences programmées de ces opérations précitées.

Le manipulateur déplace ce type de dispositif manuellement, et le positionne au-dessus des plaques ou des puits contenant les liquides à prélever ou destinés à recevoir les échantillons liquides. Ces dispositifs sont adaptés à des plaques ou puits dont l'écartement des réceptacles est compatible avec celui des buses. Par contre, il est impossible d'utiliser ce type de dispositif pour transférer des micro-quantités de liquides entre deux supports présentant des réceptacles dont l'écartement est différent.

Dans le deuxième type de réalisation, le dispositif est supporté par un télémanipulateur. Dans certaines variantes, le télémanipulateur supporte une pluralité de seringues et plusieurs aiguilles dont l'écartement peut être modifié. Toutefois, l'encombrement d'un support d'aiguilles ne permet pas de réduire l'écartement des extrémités de prélèvement en dessous d'une valeur minimale de l'ordre du centimètre.

L'objet de la présente invention est de proposer un dispositif simple, susceptible d'être manipulé manuellement, permettant de transférer une micro-quantité de liquide entre un premier support présentant des cavités espacées d'une première distance, vers un second support d'un type différent.

A cet effet, l'invention concerne un dispositif dans lequel les buses d'aspiration/refoulement sont raccordées à une ou plusieurs seringues munies d'un piston motorisé ou commandé manuellement, par l'intermédiaire de tubes souples, les buses étant supportées par des moyens mécaniques permettant de modifier l'écartement entre deux buses consécutives. De préférence, une même seringue est raccordée à une seule buse, voire à la totalité des buses.

Ce mode de réalisation permet d'adapter rapidement, et de façon continue, la conformation du dispositif à différents types de supports d'échantillons, et notamment d'adapter la conformation pendant l'opération de transfert entre un support présentant un premier type d'espacement des cavités ou puits, et un second support présentant un deuxième type d'espacement.

De préférence, les buses sont disposées pour former un réseau à pas variable.

Selon un mode de réalisation préféré, les moyens mécaniques pour la modification de l'écartement entre les buses sont constitués par un réseau déformables, les buses étant disposées à certains noeuds au moins dudit réseau. Le réseau peut présenter soit des mailles égales, ce qui assure un écartement variable mais équidistant des buses, ou peut présenter des mailles inégales, ce qui permet d'assurer un écartement non constant des buses. Ce dernier mode de réalisation est en particulier adapté au remplissage de tubes dans un carrousel. En particulier, ce mode de réalisation se traduit par une trajectoire courbe des buses, et une répartition des positions possibles sur cette courbe.

Avantageusement, les moyens mécaniques pour la modification de l'écartement entre les buses sont constitués par un ensemble de bras articulés au niveau de leurs intersections et formant un croisillon déformable, les buses étant fixées sur ledit croisillon déformable au niveau d'une partie au moins des intersections.

Selon une première variante, le dispositif comporte des moyens électromécaniques pour modifier l'écartement entre deux points du réseau déformable.

Selon une deuxième variante, le dispositif comporte des moyens électromécaniques pour modifier l'angle formé entre deux branches d'un desdits parallélogrammes déformables.

De préférence, le dispositif selon l'invention comporte des moyens électromécaniques pour modifier l'écartement entre deux points du réseau déformable.

Selon un mode de réalisation particulier, les buses sont propres à recevoir des embouts interchangeables.

L'invention sera mieux comprise à la lecture de la description qui suit, faisant référence aux dessins annexés relatifs à un mode de réalisation non limitatif de l'invention, où :
- la figure 1 représente une vue de face du dispositif selon l'invention ;
- la figure 2 représente une vue selon un plan de coupe transversale AA' du dispositif en mode d'écartement maximal des buses ;
- la figure 3 représente une vue selon un plan de coupe transversale AA' du dispositif en mode d'écartement minimal des buses ;
- la figure 4 représente une vue de face d'une variante de réalisation d'un dispositif selon l'invention.

Le dispositif selon l'exemple de réalisation décrit plus en détail comporte un corps (1) dont les dimensions sont adaptées à une manipulation manuelle. Ce corps (1) est constitué par un élément tubulaire fermé à son extrémité inférieur par une platine (2) et à son extrémité inférieur par une platine (3).

La platine (3) supporte un ensemble de 8 seringues fixes (4 à 7) munies chacune d'un piston (8 à 11). Les pistons sont actionnés par un moteur (12) agissant simultanément sur l'ensemble des pistons par l'intermédiaire d'une pièce de liaison (13) entraînée par une vis sans fin, de manière connue.

La partie inférieure du corps (1) renferme une platine (14) supportant les buses (15 à 22). Ces buses mobiles (15 à 22) sont raccordées aux extrémités des seringues fixes (4 à 7) opposées aux pistons (8 à 11). Une seringue est raccordée à une buse par l'intermédiaire d'un tube souple (23). les aiguilles sont supportées par un porte-aiguille permettant le remplacement rapide. Selon une variante, le porte-aiguille autorise un débattement vertical de l'aiguille, ce qui permet une adaptation à des supports de hauteurs inégales.

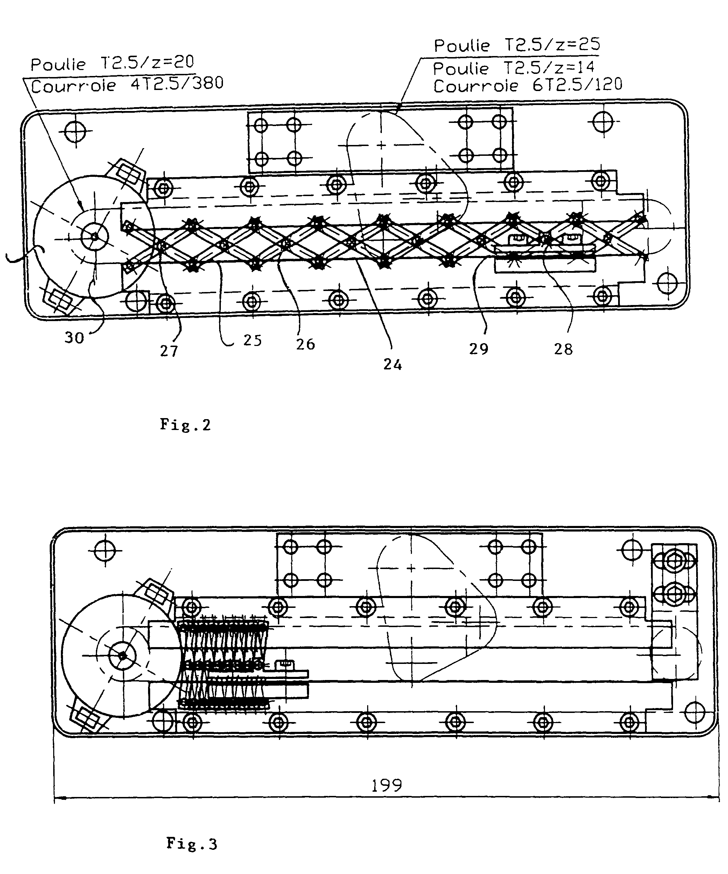

La figure 2 représente une vue selon un plan de coupe médian de la platine (14).

Elle comporte un croisillon articulé (24) formé par un ensemble de biellettes (25) articulées en leurs centres et à leurs extrémités pour former des parallélogrammes déformables. Les buses (15 à 22) sont disposées aux noeuds de ce réseau déformable, et traversent les articulations médianes (26) des biellettes (25).

Le croisillon articulé est fixé sur la platine (14) au niveau de la première articulation médiane (27) qui constitue un point fixe par rapport à la platine. L'articulation médiane (28) à l'opposée de l'articulation fixe (27) est solidaire d'une pièce mobile (28) entraînée par une courroie (29). Cette courroie est entraînée par une poulie (30) actionnée par un moteur pas-à-pas (31).

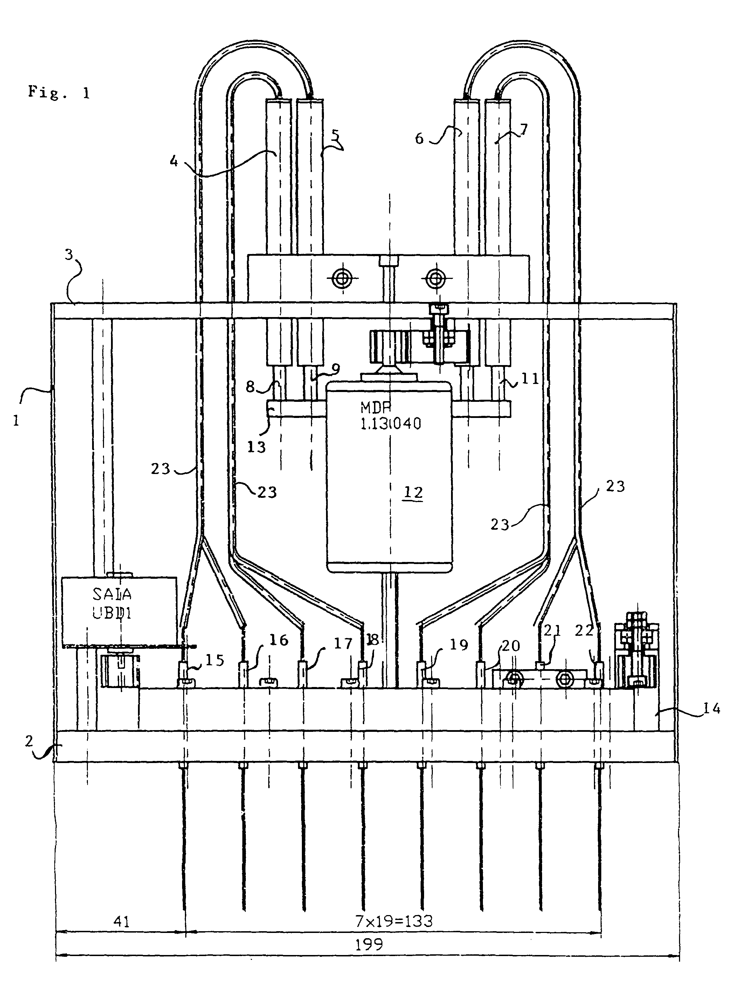

Lorsque la pièce mobile (28) est déplacée par la courroie à l'extrémité opposée à l'articulation médiane fixe (27), soit à l'extrémité droite sur la figure 1, le croisillon déformable (24) présente une extension maximale, et les buses sont donc en position d'écartement maximal.

Lorsque le moteur (31) fait tourner la poulie dans le sens des aiguilles d'une montre, la pièce mobile (28) est entraînée en direction de l'articulation médiane fixe (27), ce qui réduit l'extension du croisillon déformable (24), jusqu'à atteindre une extension minimale correspondant à la situation représentée en figure 3.

L'écartement des buses peut ainsi varier de manière progressive entre un écartement minimal très réduit, et l'écartement maximal correspondant à l'extension totale du croisillon déformable (24).

L'invention est décrite à titre d'exemple non limitatif. Il est entendu que l'Homme de Métier sera à même de réaliser différentes variantes sans pour autant sortir du cadre de l'invention. En particulier, ce dispositif peut être supporté par un télémanipulateur commandant les déplacements dans le plan horizontal et vertical. Le dispositif peut également, sans sortir du cadre de l'invention, être formé de deux blocs séparés, reliés par des tubes cathéter. Le premier bloc comprend les seringues et les moyens de commande électromécaniques des pistons des seringues. Le deuxième bloc comporte uniquement le support de buses et les buses et éventuellement la motorisation. Les buses sont reliées aux seringues par l'intermédiaire de tubes cathéter réunis pour former un faisceau de liaison entre les deux blocs.

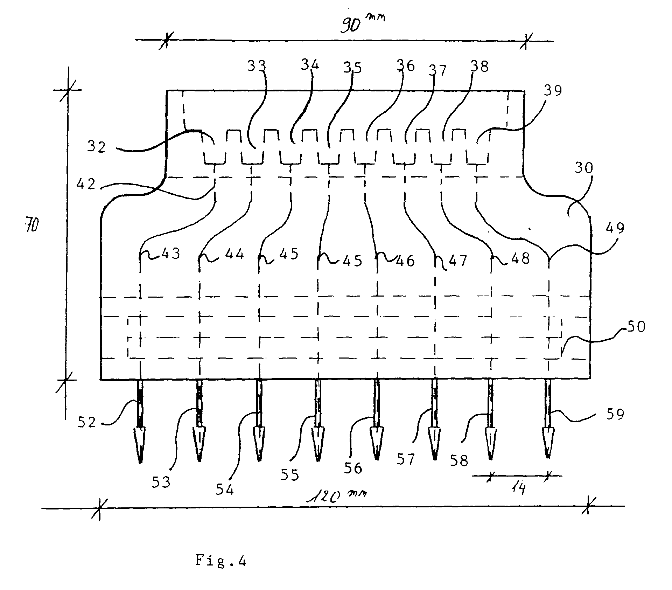

La figure 4 représente une vue de face d'une variante de réalisation d'un dispositif selon l'invention.

Cette variante consiste en un dispositif adaptateur susceptible de prolonger un manipulateur d'échantillons à écartement fixe.

Il est formé par un corps (30) présentant à sa face supérieure (31) une fente communiquant avec un ensemble de raccords (32 à 39) de forme complémentaire à la forme extérieure des embouts d'un dispositif traditionnel. Ces raccords (32 à 39) peuvent être formés dans un bloc en matière plastique présentant des logements cylindriques munis de joints toriques. Ils se prolongent par des tubulures souples (42 à 49). Ces tubulures sont raccordées aux embouts mobiles (52 à 59). Ces embouts sont supportés par une structure articulée (50) autorisant un déplacement continu et conservant un pas régulier entre les embouts mobiles.

Un tel adaptateur peut également être réalisé sous une forme non motorisée. Dans ce cas, un curseur fixé sur l'un des embouts d'extrémité permet de modifier le pas, l'autre embout d'extrémité étant bloqué à une position prédéterminé par l'utilisateur. Eventuellement, deux butées ajustables permettent de limiter la course des embouts, entre un pas minimum et un pas maximum.

## Revendications

1. Dispositif pour le transfert d'échantillons de micro-quantités de liquides, du type comportant un ensemble de buses (15 à 22) d'aspiration/refoulement communiquant par l'intermédiaire de tubes souples avec une ou plusieurs seringues munies d'un piston motorisé, lesdites buses (15 à 22) étant mobiles et supportées par des moyens mécaniques permettant de modifier l'écartement entre deux buses (15 à 22) consécutives de façon continue et avec un pas constant **caractérisé en ce que** moyens mécaniques pour la modification de l'écartement entre les buses sont constitués par un ensemble de bras articulés au niveau de leurs intersections et formant des croisillons déformables, les buses étant fixées sur lesdits croisillons déformables au niveau d'une partie au moins des intersections pour former un réseau de noeuds équidistant à pas variable autorisant une variation continue entre un écartement minimal et un écartement maximal.

2. Dispositif pour le transfert d'échantillons de liquides selon la revendication 1 **caractérisé en ce qu'**il comporte des moyens électromécaniques pour modifier l'écartement entre deux points du réseau déformable.

3. Dispositif pour le transfert d'échantillons de liquides selon la revendication 1 ou 2 **caractérisé en ce qu'**il comporte des moyens électromécaniques ou pneumatique pour modifier l'écartement entre deux points du réseau déformable.

4. Dispositif pour le transfert d'échantillons de liquides selon la revendication 1 ou 2 **caractérisé en ce qu'**il comporte des moyens électromécaniques pour modifier l'angle formé entre deux branches d'un desdits polygones déformables.

5. Dispositif pour le transfert d'échantillons de liquides selon l'une quelconque des revendications précédentes **caractérisé en ce qu'**il comporte des moyens électromécaniques pour commander le déplacement du piston de la seringue ou le déplacement simultané des pistons des seringues.

6. Dispositif pour le transfert d'échantillons de liquides selon l'une quelconque des revendications précédentes **caractérisé en ce que** les buses sont propres à recevoir des embouts interchangeables.

7. Dispositif pour le transfert d'échantillons de liquides selon l'une quelconque des revendications précédentes **caractérisé en ce que** les aiguilles sont susceptibles de recevoir des porte-embouts interchangeables permettant l'usage d'embouts interchangeables de différents volumes et de différentes formes, sur un même instrument.

8. Dispositif pour le transfert d'échantillons de liquides selon l'une quelconque des revendications précédentes **caractérisé en ce qu'**il est formé par un corps (30) présentant un ensemble de raccords (32 à 39) pour recevoir des embouts d'un dispositif traditionnel, ces raccords (32 à 39) se prolongeant par des tubulures souples (42 à 49) raccordées aux embouts mobiles (52 à 59) supportés par une structure articulée (50) autorisant un déplacement continue et conservant un pas régulier entre les embouts mobiles.

## Patentansprüche

1. Vorrichtung zur Übertragung von Mikromengen Flüssigkeitsproben, derjenige Art die einen Satz von Ansaug-/Anstaudüsen (15 bis 22) umfasst, die über Schläuche mit einer oder mehreren mit einem motorisierten Kolben versehenen Spritzen verbunden sind, welche Düsen (15 bis 22), beweglich sind und mit mechanischen Mitteln abgestützt werden, die es ermöglichen, den Abstand zwischen zwei nacheinanderfolgenden Düsen (15 bis 22) ständig und mit gleichbleibendem Schritt abzuändern, **dadurch gekennzeichnet, dass** die mechanischen Mitteln zur Abstandsabänderung zwischen den Düsen aus auf ihrer Schnittpunkthöhe ausschwenkbaren Armen bestehen, welche verformbare Armkreuze bilden und dass dabei die Düsen auf mindestens einem Teil der Schnittpunkte auf den genannten verformbaren Armkreuzen befestigt sind, um ein abstandsgleiches Knotennetzwerk mit variablem Schritt zu bilden, das eine ständige Variation zwischen einem Minimal- und einem Maximalabstand ermöglicht.

2. Vorrichtung zur Flüssigkeitsprobenübertragung nach Anspruch 1, **dadurch gekennzeichnet, dass** sie mechanische Mittel zur Abstandsabänderung zwischen zwei Punkten des verformbaren Netzwerks aufweist.

3. Vorrichtung zur Flüssigkeitsprobenübertragung nach Anspruch 1 oder 2, **dadurch gekennzeichnet, dass** sie mechanische oder pneumatische Mittel zur Abstandsabänderung zwischen zwei Punkten des verformbaren Netzwerks aufweist.

4. Vorrichtung zur Flüssigkeitsprobenübertragung nach Anspruch 1 oder 2, **dadurch gekennzeichnet, dass** sie elektromechanische Mittel zur Abänderung des zwischen zwei Abschnitten eines der genannten verformbaren Vielecken gebildeten Winkels aufweist.

5. Vorrichtung zur Flüssigkeitsprobenübertragung nach irgendeinem der vorangehenden Ansprüche, **dadurch gekennzeichnet, dass** sie elektromechanische Mittel zur Bewegungssteuerung des Spritzenkolbens oder zur gleichzeitigen Bewegung der gesamten Spritzenkolben aufweist.

6. Vorrichtung zur Flüssigkeitsprobenübertragung nach irgendeinem der vorangehenden Ansprüche, **dadurch gekennzeichnet, dass** die Düsen vorgesehen sind, um auswechselbare Ansätze zu tragen.

7. Vorrichtung zur Flüssigkeitsprobenübertragung nach irgendeinem der vorangehenden Ansprüche, **dadurch gekennzeichnet, dass** die Spritzen ausgelegt sind, um mit auswechselbaren Ansatzhaltern versehen zu sein, die es ermöglichen austauschbare Ansätze verschiedener Volumina und verschiedener Formen auf einem gleichen Gerät zu benutzen.

8. Vorrichtung zur Flüssigkeitsprobenübertragung nach irgendeinem der vorangehenden Ansprüche, **dadurch gekennzeichnet, dass** sie aus einem Gehäuse (30) besteht, das eine Anschlusseinheit (32 bis 39) aufweist, die ausgelegt ist, um Ansätze einer üblichen Vorrichtung zu tragen, welche Anschlüsse (32 bis 39) an mit den beweglichen Ansätzen (52 bis 59) verbundene Schläuche (42, 49) gekuppelt sind, dabei werden die beweglichen Ansätze von einer gegliederten Struktur (50) getragen, die eine fortgehende Bewegung erlaubt und für einen regelmäßigen Abstand zwischen den beweglichen Ansätzen sorgt.

## Claims

1. Device for transferring samples of micro-quantities of liquids of the type comprising an assembly of suction/discharge nozzles (15 to 22) that communicate via flexible tubes with one or more syringes provided with a motorized piston, said nozzles (15 to 22) being mobile and supported by mechanical means used to modify the spacing between two consecutive nozzles (15 to 22) continually and with a constant pitch **characterized in that** the mechanical means for modifying the spacing between the nozzles consist of an assembly of arms that are hinged at the intersections and that constitute distortable cross-bars, the nozzles being fastened to at least one part of the intersections of said distortable cross-bars to create a network of equidistant nodes of variable pitch that allows for continuous variation between a minimum and maximum spacing.

2. Device for transferring samples of liquids of claim 1 **characterized in that** it comprises electromechanical means to modify the spacing between two points of the distortable network.

3. Device for transferring samples of liquids of claim 1 or 2 **characterized in that** it comprises electromechanical or pneumatic means to modify the spacing between two points of the distortable network.

4. Device for transferring samples of liquids of claim 1 or 2 **characterized in that** it comprises electromechanical means to modify the angle between two arms of one of the said distortable polygons.

5. Device for transferring samples of liquids of any of the previous claims **characterized in that** it comprises electromechanical means to control the displacement of the piston of the syringe or the simultaneous displacement of the pistons of the syringes.

6. Device for transferring samples of liquids of any of the previous claims **characterized in that** the nozzles are capable of receiving interchangeable end-pieces.

7. Device for transferring samples of liquids of any of the previous claims **characterized in that** the needles are capable of receiving interchangeable end-piece holders that enable interchangeable end-pieces of various volumes and shapes to be used on the same instrument.

8. Device for transferring samples of liquids of any of the previous claims **characterized in that** it consists of a body (30) with a number of connectors (32 to 39) to receive end-pieces of a standard device, the connectors (32 to 39) being extended by flexible tubing (42 to 49) connected to mobile end-pieces (52 to 59) supported by a hinged structure (50) that allows continuous displacement and maintains a regular pitch between the mobile end-pieces.
